# FASCICULE DE BREVET EUROPEEN

(11) **EP 2 306 061 B1**
(45) Date de publication et mention de la délivrance du brevet: **27.05.2015**
(21) Numéro de dépôt: 10180576.0
(22) Date de dépôt: 28.09.2010
(51) Int. Cl.: F16L 37/36, F16L 37/44

(54) **Elément femelle de raccord rapide et raccord rapide incorporant un tel élement**
Schnellkupplungsmuffe und Schnellkupplung mit solcher Schnellkupplungsmuffe
female connector of a quick coupling and quick coupling comprising such female connector

(30) Priorité: 01.10.2009 FR 0956861
(43) Date de publication de la demande: 06.04.2011
(73) Titulaire: Staubli Faverges, 74210 Faverges (FR)
(72) Inventeur: Tiberghien, Alain-Christophe, 74320 Sevrier (FR); Pastore, Olivier, 73400 Ugine (FR)
(74) Mandataire: Myon, Gérard Jean-Pierre

(56) Documents cités:
- EP-A1- 1 596 119
- US-A- 4 552 333
- US-A1- 2008 011 369
- US-B1- 6 343 630
- US-B1- 6 830 059

## Description

L'invention a trait à un raccord rapide qui peut être utilisé pour la jonction amovible de deux canalisations de fluide sous pression et qui comprend, entre autres, un tel élément femelle.

Dans le domaine de la jonction amovible de canalisations parcourues par un fluide sous pression, il est connu d'utiliser un élément femelle de raccord qui comprend des moyens commandés de verrouillage d'un embout mâle en configuration emmanchée dans l'élément femelle, c'est-à-dire dans une configuration raccordée des canalisations dont les éléments mâle et femelle -constituent les extrémités respectives.

Il est connu de US-A-5 095 947 de prévoir dans un élément femelle de raccord rapide un circuit d'échappement dans lequel un fluide emprisonné dans l'élément femelle peut être purgé, grâce à la manoeuvre d'une soupape spécifique commandée par un organe rotatif associé à un piston. Une telle construction est complexe et nécessite l'emploi de nombreuses pièces qui doivent être fabriquées de façon précise et dont le fonctionnement peut se dégrader au cours de la durée de vie du raccord. En outre, le matériel connu de US-A-5 095 947 est relativement encombrant et un nombre important de joints doit être prévu.

Il est également connu de US-B-6 343 630 ou de EP-A-1 596 119 de faire porter l'extrémité d'un conduit d'un élément femelle de raccord contre un joint interne d'un élément mâle. Ces éléments femelles sont volumineux et nécessitent de nombreux joints.

C'est à ces inconvénients qu'entend plus particulièrement remédier l'invention en proposant un nouvel élément femelle de raccord rapide qui est plus simple et plus fiable que ceux de l'état de la technique, notamment grâce à un nombre restreint de pièces et de joints d'étanchéité, et dont l'encombrement est diminué par rapport aux matériels connus, tout en gardant une bonne fiabilité de fonctionnement.

A cet effet, l'invention concerne un raccord rapide destiné à la jonction amovible de canalisations de fluide sous pression, ce raccord comprenant deux éléments, respectivement mâle et femelle aptes à s'emmancher l'un dans l'autre selon un axe longitudinal de l'élément femelle. L'élément femelle est équipé d'au moins un organe de verrouillage de l'embout d'élément mâle en configuration emmanchée, d'un conduit de circulation de fluide, d'une vanne qui contrôle l'écoulement du fluide dans le conduit de circulation et comprend un élément mobile par rapport à un siège, d'un circuit d'échappement du fluide contenu dans une portion de volume interne formant le conduit de circulation en aval du siège de la vanne dans le sens d'écoulement du fluide sous pression et d'un embout creux délimitant en partie le conduit de circulation et apte à venir en appui contre un joint porté par l'élément mâle emmanché dans l'élément femelle., ce joint étant reçu dans une gorge périphérique interne de l'élément mâle. Ce raccord est caractérisé en ce que l'embout creux est constitué d'un manchon interne et d'un manchon externe co-axiaux et mobiles axialement l'un par rapport à l'autre, en ce que le manchon interne et le manchon externe sont chacun aptes à venir en appui contre le joint porté pas l'élément mâle et en ce qu'un espace défini entre les deux manchons est relié fluidiquement au circuit d'échappement.

Grâce à l'invention, les manchons interne et externe de l'embout creux permettent, d'une part, de maintenir un joint porté par un élément mâle de raccord dans une gorge de cet élément mâle pour réaliser l'étanchéité entre l'élément mâle et l'embout creux et, d'autre part, de contrôler l'échappement de fluide sous pression en donnant accès ou non à l'espace annulaire ménagé entre ces deux manchons.

Selon des aspects avantageux mais non obligatoires de l'invention, un tel raccord peut incorporer une ou plusieurs des caractéristiques suivantes, prises dans toute combinaison techniquement admissible :
- l'espace défini entre les deux manchons débouche axialement et sur l'avant de l'un ou dés manchons dans un volume circulaire autour de l'axe longitudinal, ce volume étant en communication fluidique avec la portion de volume interne ;
- le manchon interne est solidaire d'un corps principal qui définit le siège de la vanne, tandis que le manchon externe est solidaire d'un corps auxiliaire mobile axialement par rapport au corps principal ;
- l'élément comporte des moyens de transmission, entre un levier de commande mobile par rapport au corps principal et le corps auxiliaire, d'un mouvement de déplacement relatif du corps auxiliaire et du corps principal, le levier étant apte à commander le passage de la vanne d'une configuration ouverte à une configuration fermée ;
- une butée, solidaire d'un premier manchon parmi les manchons interne et externe, coopère avec une première came étagée selon l'axe longitudinal de l'élément femelle, solidaire selon l'axe longitudinal de l'élément femelle du deuxième manchon parmi les manchons interne et externe, montée avec possibilité de coulissement perpendiculairement à l'axe longitudinal de l'élément femelle dans le deuxième manchon, cette première came étant manoeuvrable par un levier articulé sur l'élément femelle;
- la première came est solidaire d'une deuxième came en appui contre un galet solidaire d'une bague de commande d'un organe de verrouillage mobile dans un logement ménagé dans un corps de l'élément femelle, entre une première position, où l'organe de verrouillage est dégagé par rapport à une gorge périphérique d'un embout d'élément mâle emmanché dans l'élément femelle, et une deuxième position où l'organe de verrouillage fait saillie hors du logement dans une configuration où il peut être engagé dans la gorge d'un embout d'élément mâle emmanché dans l'élément femelle, et en ce que la deuxième came est apte à être déplacée par le levier dans un sens où elle repousse le galet dans une direction telle que la bague de commande entraîne l'organe de verrouillage de sa première position vers sa deuxième position ;
- l'extrémité du manchon interne est chanfreinée sur l'extérieur et présente une surface tronconique d'extrémité, la valeur du demi-angle au sommet de cette surface tronconique étant comprise entre 10° et 41°, de préférence de l'ordre de 25° ;
- l'extrémité du manchon externe est chanfreinée sur l'extérieur et présente une surface tronconique d'extrémité, la valeur du demi-angle au sommet de cette surface tronconique étant comprise entre 60 et 80°, de préférence de l'ordre de 72°.
en configuration verrouillée des éléments mâle et femelle emmanchés l'un dans l'autre avec la vanne en position ouverte, le manchon interne est en appui contre le joint, alors que ce même joint empêche le passage du fluide depuis le conduit de circulation du fluide vers le circuit d'échappement ;
- en configuration verrouillée des éléments mâle et femelle emmanchés l'un dans l'autre avec la vanne en position ouverte, le même joint empêche le passage du fluide depuis le conduit de circulation vers le circuit d'échappement et empêche le passage du fluide vers l'extérieur des éléments mâle et femelle par une zone d'interface définie entre le manchon externe et un corps de l'élément mâle ;
- en configuration verrouillée des éléments mâle et femelle emmanchés l'un dans l'autre avec la vanne en position ouverte, le joint est au contact de la surface externe du manchon interne, de l'extrémité avant du manchon externe, et du fond de la gorge ;
- en configuration verrouillée des éléments mâle et femelle emmanchés l'un dans l'autre et purge après la fermeture de la vanne, le joint empêche le passage du fluide vers l'extérieur des éléments mâle et femelle par une zone d'interface définie entre le manchon externe et un corps de l'élément mâle mais n'empêche pas le passage du fluide depuis le conduit de circulation vers le circuit d'échappement ;
- entre une configuration verrouillée des éléments mâle et femelle emmanchés l'un dans l'autre avec la vanne en position ouverte et une configuration verrouillée des éléments mâle et femelle emmanchés l'un dans l'autre et purge après la fermeture de la vanne, le manchon externe effectue par rapport au manchon interne un mouvement axial vers l'avant de l'élément femelle ;
- entre une configuration non verrouillée des éléments mâle et femelle emmanchés l'un dans l'autre avec la vanne en position fermée et une configuration verrouillée des éléments mâle et femelle emmanchés l'un dans l'autre avec la vanne en position ouverte, le manchon externe effectue par rapport au manchon interne un mouvement axial vers l'arrière de l'élément femelle.

L'invention sera mieux comprise et d'autres avantages de celle-ci apparaîtront plus clairement à la lumière de la description qui va suivre de trois modes de réalisation d'un élément femelle de raccord et d'un raccord conformes à son principe, donnée uniquement à titre d'exemple et faite en référence aux dessins dans lesquels :
- la figure 1 est une vue en perspective d'un raccord conforme à l'invention incorporant un élément femelle conforme à l'invention et un élément mâle engagé dans l'élément femelle sans être verrouillé avec celui-ci ;
- la figure 2 est une vue de dessus du raccord de la figure 1 ;
- la figure 3 est une coupe à plus grande échelle selon la ligne III-III à la figure 2, une partie d'un tuyau et d'un levier d'actionnement de l'élément femelle étant omise pour la clarté du dessin ;
- la figure 4 est une vue à plus grande échelle du détail IV à la figure 3 ;
- la figure 5 est une coupe à plus grande échelle selon la ligne V-V à la figure 3 ;
- la figure 6 est une coupe analogue à la figure 3, alors que l'élément mâle est en cours de verrouillage dans l'élément femelle ;
- la figure 7 est une coupe selon la ligne VII-VII à la figure 2, alors que les éléments du raccord sont dans la configuration de la figure 6 ;
- la figure 8 est une coupe analogue à la figure 7, lors de la prise d'étanchéité de l'élément femelle sur un joint porté par l'élément mâle du raccord ;
- la figure 9 est une vue à plus grande échelle du détail IX à la figure 8 ;
- la figure 10 est une coupe analogue à la figure 7, lors de l'ouverture d'une vanne de contrôle de l'écoulement de fluide à l'intérieur de l'élément femelle ;
- la figure 11 est une vue à plus grande échelle du détail XI à la figure 10 ;
- la figure 12 est une coupe selon le plan XII-XII à la figure 2 lorsque les éléments du raccord sont dans la configuration des figures 10 et 11 ;
- la figure 13 est une coupe à plus grande échelle selon la ligne XIII-XIII à la figure 10 ;
- la figure 14 est une coupe analogue à la figure 7 lors de la fermeture de la vanne de l'élément femelle et de la purge d'un fluide présent au sein du raccord ;
- la figure 15 est une vue à plus grande échelle du détail XV à la figure 14 ;
- la figure 16 est une section comparable à la figure 5 pour un raccord conforme à un deuxième mode de réalisation de l'invention.

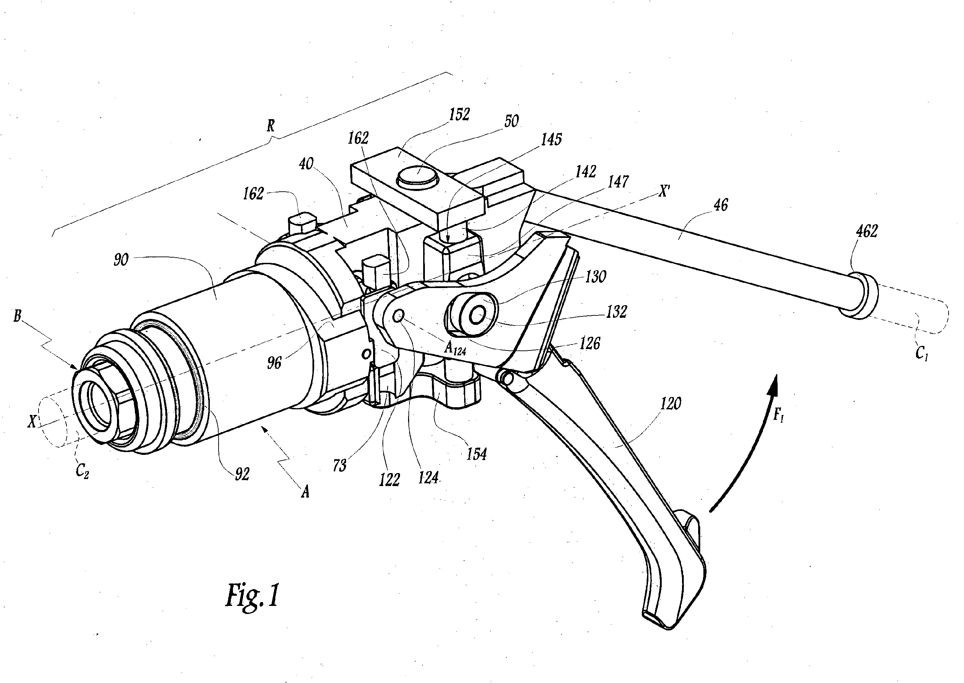

Le raccord rapide R représenté sur les figures 1 à 14 comprend un élément femelle A et un élément ou embout mâle B prévus pour s'emmancher l'un dans l'autre dans la direction d'un axe X-X' qui est, en pratique, un axe longitudinal commun aux éléments A et B.

Par convention, on considère que la partie avant d'un élément A ou B est la partie de cet élément tournée vers l'autre élément lors de leur connexion.

La partie arrière de l'élément femelle A est raccordée fluidiquement à une première canalisation C₁, elle-même raccordée à une source de fluide sous pression non représentée, par exemple une source de gaz tel que du GPL ou de l'hydrogène à une pression de l'ordre de 300 bars. La partie arrière de l'élément mâle B est raccordée à une deuxième canalisation C₂, elle-même raccordée à un organe d'utilisation ou de stockage du fluide provenant de la source précitée. A titre d'exemple, la canalisation C₂ peut être raccordée à un réservoir embarqué sur un véhicule automobile.

L'élément mâle B comprend un corps tubulaire 11 sur lequel est raccordée la canalisation C₂ et qui définit un canal 12 de circulation de fluide sous pression. Un clapet anti-retour 13 est monté dans le corps 11 et vient en appui contre un siège formé par un joint 14 logé dans une gorge périphérique interne 15 du corps 11, ceci sous l'effet d'un ressort non représenté.

Sur sa surface périphérique externe 16 le corps 11 est pourvu d'une gorge périphérique 17 de révolution dont le profil est défini par un fond 17a, qui est plat, et par deux bords 17b et 17c qui divergent en s'éloignant du fond 17a. Ainsi, le fond 17a est cylindrique à base circulaire, alors que les bords 17b et 17c sont tronconiques.

Le corps 11 est également pourvu, sur sa surface radiale interne 18, d'une gorge périphérique 19 de révolution, dans laquelle est reçu un joint torique 20 en élastomère.

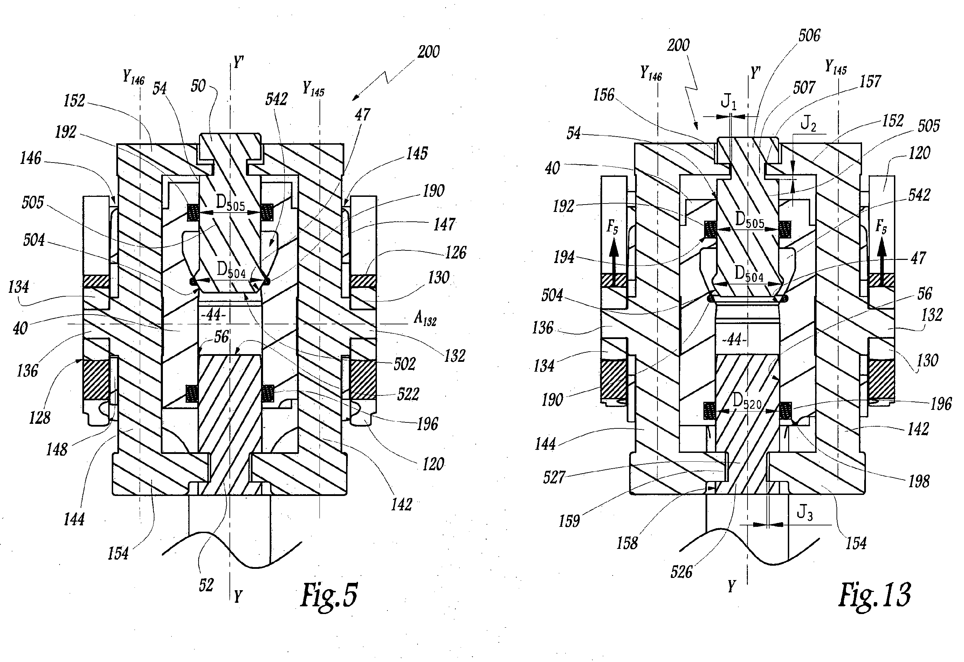

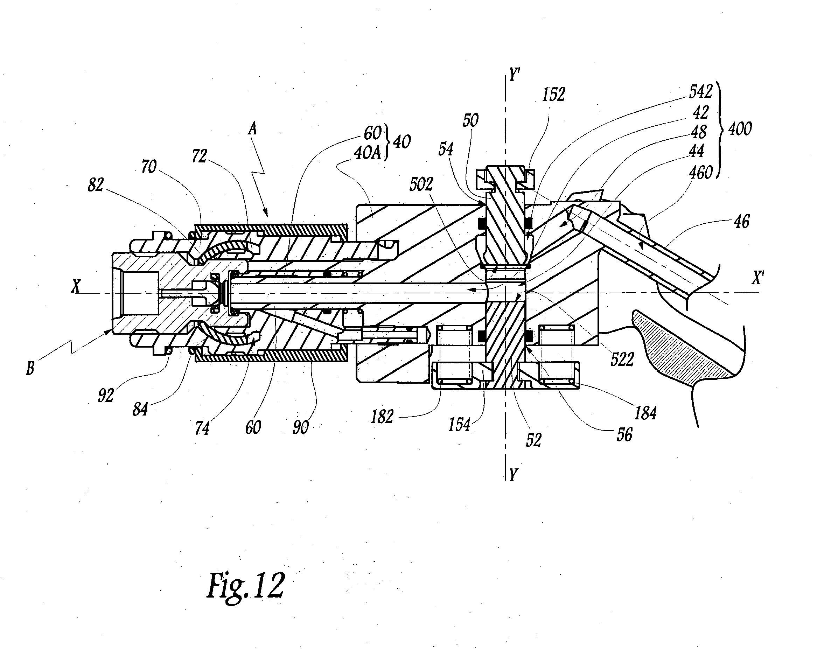

L'élément femelle A comprend un corps principal 40 qui est plus particulièrement visible à la figure 12 et dans lequel sont reçus un premier piston 50 et un deuxième piston 52, visibles aux figures 5, 12 et 13, ces pistons étant respectivement montés dans un premier alésage 54 et dans un deuxième alésage 56 alignés l'un avec l'autre et ayant un axe central commun Y-Y' perpendiculaire à l'axe X-X'. Le corps principal 40 forme un canal 42 de circulation de fluide sous pression à partir d'une chambre 44 définie entre des surfaces en regard 502 et 522 des pistons 50 et 52. Les surfaces 502 et 522 constituent deux surfaces opposées perpendiculaires à l'axe Y-Y' au contact du fluide transitant dans l'élément de raccord A quand la vanne 200 est ouverte.

Le corps principal 40 se prolonge par un tuyau 46 qui se termine par une bride 462 sur laquelle est raccordée la canalisation C₁. Un canal 48 relie le volume intérieur 460 du tuyau 46 à un espace annulaire 542 autour du piston 50.

Ainsi, le volume intérieur 460 du tuyau 46, le canal 48, l'espace 542, la chambre 44 et le canal 42 définissent ensemble un conduit 400 de circulation de fluide sous pression à l'intérieur de l'élément femelle de raccord A à partir de la canalisation C₁. La circulation du fluide sous pression dans le conduit 400 est commandée par une vanne 200 dont les pistons 50 et 52 constituent des éléments mobiles.

Le canal 42 s'étend à la fois au sein d'une partie massive 40A du corps principal 40 et à l'intérieur d'un manchon interne 60 qui prolonge selon X-X' la partie 40A vers l'avant de l'élément A. Le manchon interne 60 est cylindrique, à section circulaire et creux. Le manchon interne 60 est représenté sur les figures comme étant monobloc avec la partie 40A du corps 40. En variante, le manchon interne 60 peut être rapporté sur ce corps, notamment par vissage ou soudage.

Le fait que le manchon interne 60 est ménagé dans le corps principal 40 permet de minimiser la perturbation de la circulation du fluide et de limiter le nombre de pièces en contact avec le fluide, ce qui constitue un avantage notamment dans le cas où le fluide est de l'hydrogène.

Un corps auxiliaire 70 est monté sur le corps principal 40 avec possibilité de déplacement axial vis-à-vis de ce corps principal, parallèlement à l'axe X-X'. Le corps auxiliaire 70 est soumis à l'action d'un ressort 789 qui tend à le repousser selon l'axe X-X' vers l'avant de l'élément femelle A.

Le corps auxiliaire 70 définit deux logements 72 et 74 dans lesquels sont reçus deux organes de verrouillage 82 et 84. Ces organes de verrouillage sont mobiles entre une première position où ils sont complètement engagés dans les logements 72 et 74, de sorte qu'ils ne font pas saillie radialement à partir du corps auxiliaire 70 et en direction de l'axe X-X', et une deuxième position où ces organes de verrouillage 82 et 84 dépassent des logements 72 et 74 en direction de l'axe X-X', au point qu'ils peuvent être partiellement engagés dans la gorge 17 du corps 11 et retenir ainsi l'élément mâle B en position verrouillée dans le corps auxiliaire 70. Les organes de verrouillage 82 et 84 ont des surfaces opposées en forme de tronçon de sphère, alors que les logements 72 et 74 sont également en tronçon de sphère, ce qui confère une bonne compacité radiale au corps auxiliaire 70.

Selon des variantes non représentées de l'invention, les organes de verrouillage peuvent être des pions disposés dans des logements inclinés par rapport à l'axe X-X', comme envisagé dans EP-1 531 297, ou des billes, comme envisagé dans EP-A-1 561 991. La présente invention est applicable indépendamment du type exact des organes de verrouillage utilisés.

Une bague de commande 90 est montée, avec possibilité de coulissement, selon l'axe X-X' autour du corps auxiliaire 70 dont la surface radiale externe est à section circulaire. La bague 90 est soumise à l'action d'un ressort 92 qui tend à la repousser en direction de la partie massive 40A du corps principal 40.

Des moyens de liaison mécanique non représentés relient la bague 90 aux organes de verrouillage 82 et 84, de sorte que le coulissement de la bague 90 autour du corps auxiliaire 70 permet de contrôler la position des organes de verrouillage 82 et 84 le long de l'axe X-X' et par rapport à leurs logements respectifs 72 et 74. Ainsi, il est possible de verrouiller l'élément mâle B dans l'élément femelle en déplaçant la bague 90 par rapport au corps auxiliaire 70 vers l'avant de l'élément A, c'est-à-dire dans une direction telle que les organes de verrouillage 82 et 84 sont amenés de leur première position à leur deuxième position mentionnées ci-dessus.

Le corps auxiliaire 70 entoure le manchon interne 60 et définit un volume 76 de réception du bord avant 111 du corps 11 de l'élément mâle.

Le corps auxiliaire 70 forme un manchon externe 78 creux, cylindrique, coaxial au manchon interne 60 qui s'étend radialement entre le logement 76 et le manchon interne 60 et sur lequel s'exerce l'effort du ressort 789. On note 62 l'extrémité du manchon interne 60 qui est opposé à la partie 40A du corps principal 40 et qui est entourée par le manchon externe 78, dans la position des figures 1 à 7.

Les parties 60 et 78 de l'élément A constituent ensemble un embout creux 80 à l'intérieur duquel est délimitée une partie du conduit 400 de circulation de fluide et qui peut venir en appui contre le joint torique 20, comme cela ressort des explications qui suivent.

Dans une configuration désaccouplée de l'élément femelle de raccord A, le manchon externe 78 entoure l'extrémité 62 au point que leurs bords avant respectifs sont sensiblement alignés selon une direction perpendiculaire à l'axe X-X'.

Un conduit d'échappement 100 est ménagé transversalement dans le corps auxiliaire 70 et se prolonge jusqu'au niveau de la surface radiale externe 64 du manchon interne 60.

Le conduit d'échappement 100 communique avec le conduit de circulation du fluide 400, à travers un espace annulaire 300 défini entre, d'une part, la surface radiale externe 64 du manchon interne 60 et, d'autre part, la surface radiale interne 79 du manchon externe 78. L'espace annulaire 300 communique fluidiquement avec le circuit d'échappement 100 quelle que soit la position relative des manchons interne 60 et externe 78 au cours du fonctionnement du raccord R. En outre, l'espace annulaire 300 débouche axialement et sur l'avant des manchons 60 et 78 dans un volume circulaire autour de l'axe X-X', ce volume étant en communication avec le canal 42 du conduit de circulation de fluide 400. Le fait que l'épaisseur radiale e₃₀₀ de l'espace annulaire 300 est très faible, de l'ordre de 0,025 mm, conjugué au fait que les manchons interne 60 et externe 78 sont coaxiaux confère une bonne compacité radiale à l'élément femelle A.

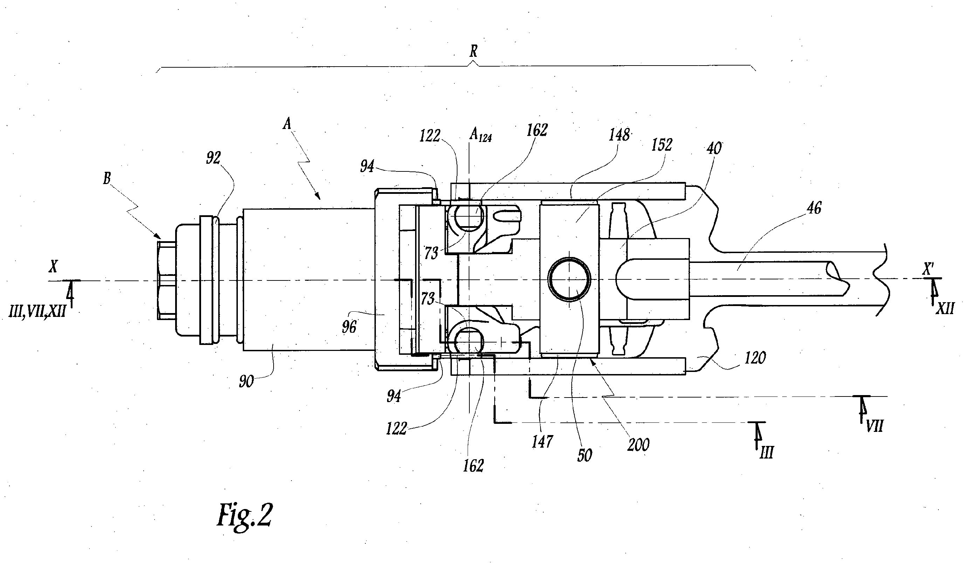

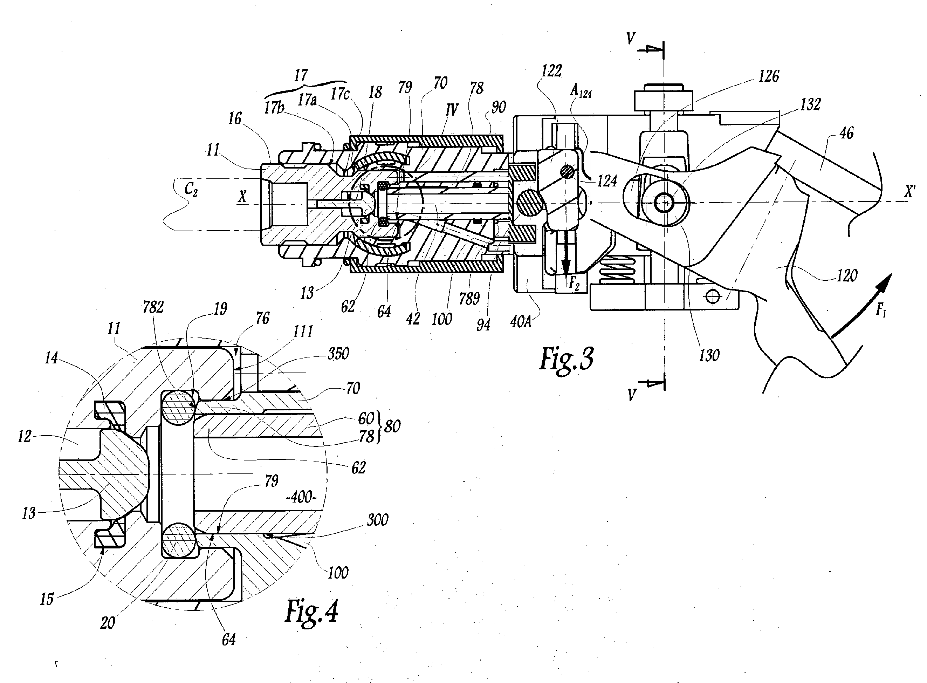

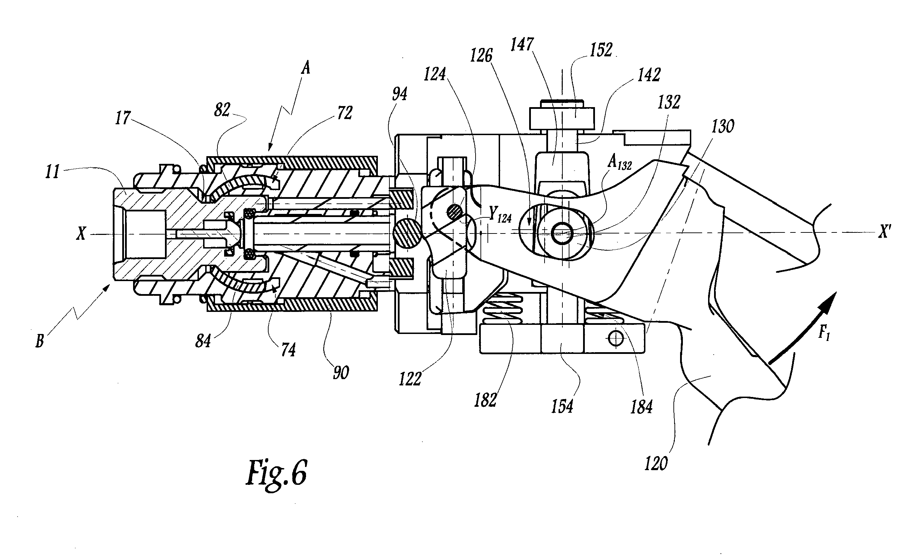

Un levier 120 est articulé sur une came 122 grâce à un pion 124 dont on note A₁₂₄ l'axe longitudinal. En pratique, deux cames 122 sont montées de part et d'autre du corps 40 comme visible à la figure 2 et le levier 120 est articulé sur ces deux cames, autour d'un axe A₁₂₄ commun. Sur la figure 3, la partie du levier 120 articulée sur la came 122 n'est pas représentée, compte-tenu du plan de coupe. La trace de cette partie d'articulation est visible en traits mixtes à la figure 6.

Le levier 120 est pourvu d'une première lumière 126 dans laquelle est engagé un galet 130 monté rotatif autour d'un pion 132. Le levier 120 est également pourvu d'une deuxième lumière 128 qui est masquée à la figure 1 et dans laquelle est engagé un galet 134 monté pivotant autour d'un pion 136.

Les pions 132 et 136 sont solidaires respectivement d'une première colonne 142 et d'une deuxième colonne 144 qui s'étendent entre une première plaque 152 et une deuxième plaque 154 sur lesquelles sont respectivement montés les pistons 50 et 52. Les colonnes 142 et 144 constituent les organes de liaison mécanique entre les plaques 152 et 154 et sont également les moyens communs aux pistons 50 et 52 sur lesquels agissent les galets 130 et 134 pour la commande du mouvement des pistons 50 et 52 dans les sens d'ouverture et fermeture de la vanne 200. Les colonnes 142 et 144 sont montées coulissantes dans deux alésages 145 et 146 ménagés dans des parties externes 147 et 148 du corps principal 40. Les alésages 145 et 146 sont centrés sur des axes Y₁₄₅ et Y₁₄₆ parallèles à l'axe Y-Y'. Les axes Y₁₄₅ et Y₁₄₆ se situent de part et d'autre du plan formé par les axes X-X' et Y-Y'.

Aux figures 5 et 13, les éléments 132, 136, 142, 144, 152 et 154 sont représentés comme formés par une pièce monobloc. En pratique, ils peuvent être constitués de plusieurs éléments assemblés par tout moyen approprié, notamment par soudage ou vissage.

Compte tenu de son mode de montage sur le corps principal 40, le levier 120 est susceptible de pivoter séquentiellement autour des galets 130 et 134 puis autour de l'axe A₁₂₄ et inversement.

Chaque came 122 est en appui contre un galet 94 solidaire de la bague de commande 90 à travers une chape 96.

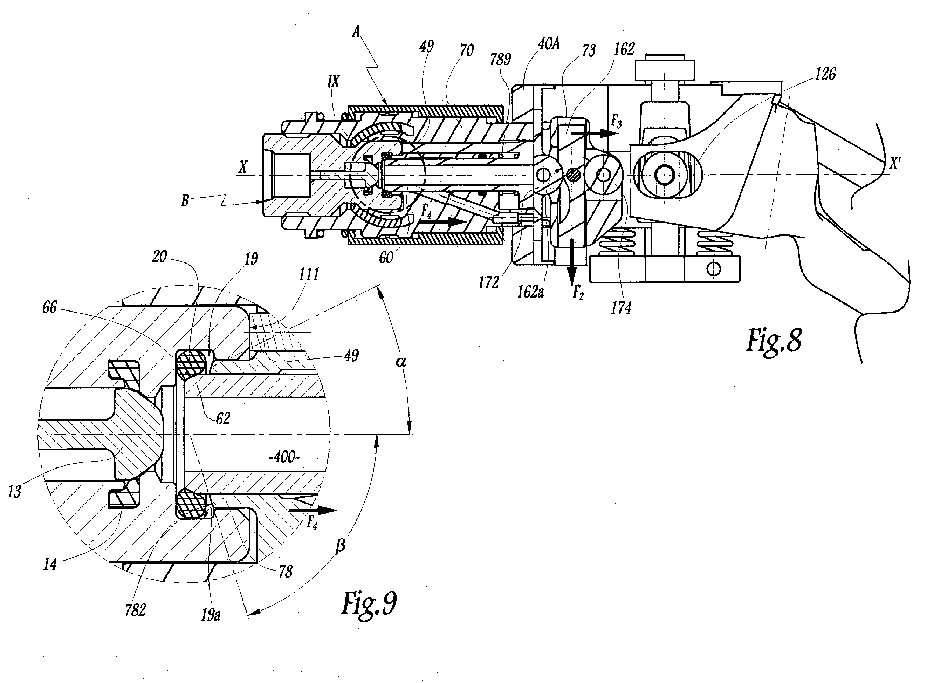

Chaque came 122 est rendue solidaire, par son pion 124, avec une deuxième came 162 qui coulisse dans un logement 73 formé dans le corps auxiliaire 70. La direction de coulissement D₁₆₂ d'une came 162 dans son logement 73 est imposée par la géométrie du corps auxiliaire 70. Cette direction de coulissement est parallèle à l'axe Y-Y'. Comme visible sur la figure 8 par exemple pour la came 162 représentée à la figure 1, chaque came 162 est disposée entre deux galets 172 et 174. Chaque galet 172 est monté tournant autour d'un pion 43 solidaire du corps principal 40 et chaque galet 174 est monté tournant autour d'un pion 45 solidaire du corps auxiliaire 70.

Le fonctionnement est le suivant : En partant d'une configuration où les éléments femelle A et mâle B sont écartés l'un de l'autre, on emmanche l'élément mâle B dans l'élément femelle A en lui faisant subir une translation selon l'axe X-X' telle que le joint 20 vient en butée contre le bord avant du manchon externe 78. On est alors dans la configuration des figures 1 à 5. Le contact entre l'embout creux 80 et l'élément mâle B dans cette configuration présente l'avantage de conférer une bonne compacité axiale au raccord R. Dans cette configuration, où les éléments femelle A et mâle B sont emmanchés et non verrouillés, deux ressorts 182 et 184 disposés entre la plaque 154 et le corps principal 40 ainsi que la pression du fluide dans l'espace annulaire 542 exercent sur l'ensemble formé des pièces 50, 142, 144, 152 et 154 un effort qui plaque le piston 50 contre un siège correspondant 47 formé par le corps principal 40 et ferme la vanne 200.

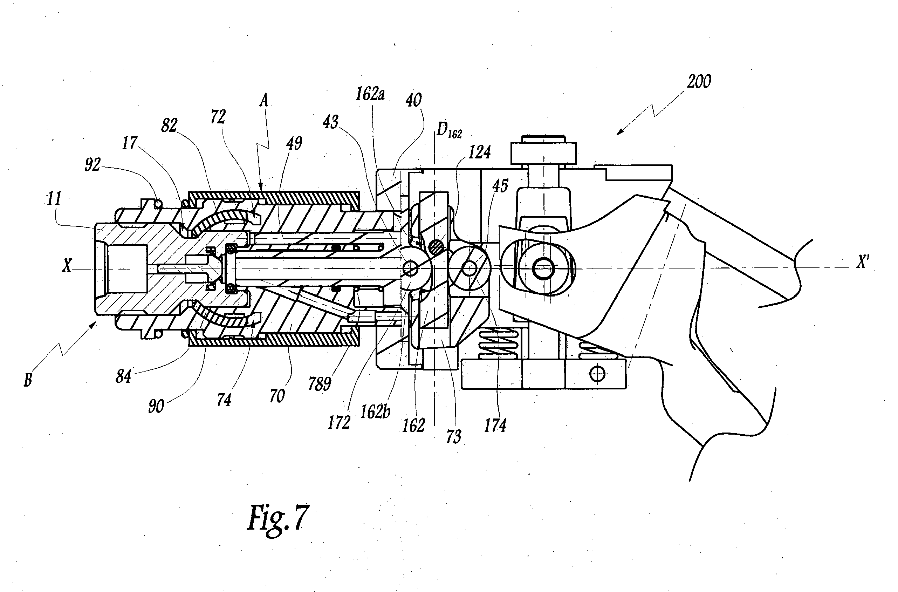

A partir de cette configuration, l'opérateur actionne le levier 120 en exerçant sur celui-ci un effort qui tend à le faire pivoter en direction du tuyau 46, comme représenté par la flèche F₁. Le levier 120 pivote alors autour des galets 130 et 134, ce qui a pour effet de déplacer les cames 122 dans le sens de la flèche F₂ à la figure 3, la direction de ce déplacement étant imposée par le guidage des cames 162 dans leurs logements 73. Le levier 120 pivote autour des galets 130 et 134 en étant guidé par leurs surfaces externes car les efforts à vaincre pour déplacer le corps auxiliaire 70 et la bague de commande 90, parallèlement à l'axe X-X', par rapport au corps principal 40, sont inférieurs aux efforts à vaincre pour déplacer les galets 130 et 134 et les pistons 50 et 52 parallèlement à l'axe Y-Y'. Compte tenu du fait que l'effort élastique exercé par le ressort 92 sur la bague de commande 90 est inférieur à l'effort élastique exercé par le ressort 789 sur le corps auxiliaire 70, et de la géométrie des cames 122, le déplacement de ces cames dans le sens de la flèche F₂ a pour effet de repousser les galets 94 vers l'avant de l'élément mâle A. Ce déplacement des galets 94 a pour effet de déplacer la bague de commande 90 selon l'axe X-X' à l'encontre de l'effort élastique exercé par le ressort 92, ce qui, compte tenu des moyens de liaison cinématique entre la bague 90 et les organes de verrouillage 82 et 84, fait sortir les organes de verrouillage 82 et 84 de leurs logements respectifs 72 et 74, au point que ceux-ci s'engagent dans la gorge 17, comme représenté aux figures 6 et 7. Les organes de verrouillage passent ainsi de leur première position à leur deuxième position. Le corps 11 de l'élément mâle B est ainsi verrouillé dans le corps auxiliaire 70 de l'élément femelle A.

Au cours du déplacement de la bague de commande 90, la came 162 et le corps auxiliaire 70 ne se déplacent pas le long de l'axe X-X' par rapport au corps principal 40. En effet, la came 162 coopère avec le galet 172 au niveau d'une portion 162b de la surface étagée 162a de la came 162 qui est perpendiculaire à l'axe X-X'. Ainsi, les extrémités avant du manchon interne 60 et du manchon externe 78 restent alignées selon une direction perpendiculaire à l'axe X-X'.

En poursuivant le mouvement de pivotement du levier 120 autour des galets 130 et 134 l'utilisateur continue à déplacer les cames 122 et 162 dans le sens de la flèche F₂, ce qui a pour effet de déplacer les cames 162 vers l'arrière de l'élément femelle A par rapport au corps principal 40 à l'encontre du ressort 789. En effet, chaque came 162 est en appui contre un galet 172 ou équivalent solidaire du corps principal 40 à travers le pion 43. En se déplaçant vers le bas à la figure 7, la came 162 est repoussée vers l'arrière du corps principal 40 car une surface de la surface de came étagée 162a, décalée vers l'avant selon l'axe X-X' par rapport à la portion 162b vient en appui contre la surface radiale externe du galet 172.

Comme chaque came 162 est engagée dans un logement 73 du corps auxiliaire 70, ce mouvement de la came 162 vers l'arrière selon l'axe X-X', dans le sens de la flèche F₃ à la figure 8, induit un mouvement correspondant représenté par la flèche F₄ pour le corps auxiliaire 70. Ce mouvement selon F₄ a pour effet d'amener le corps 11 prisonnier du corps auxiliaire 70 en appui contre l'extrémité d'un pion 49 formé par le corps principal 40 et qui s'étend parallèlement au manchon interne 60, à distance de celui-ci. Ce mouvement fait également déplacer selon l'axe X-X' le manchon 78 par rapport au manchon interne 60 vers l'arrière de l'élément femelle A. Les bords avant des manchons interne 60 et externe 78 ne sont donc plus alignés.

Pendant le déplacement selon la flèche F₄ du corps auxiliaire 70 par coopération entre la came 162 et le galet 172, la bague de commande 90 solidaire selon l'axe X-X' de la came 162 effectue le même déplacement que le corps auxiliaire 70.

Dans le référentiel de l'élément mâle B, qui est celui du corps 11 et du joint 20, le mouvement précité du corps auxiliaire 70 par rapport au corps principal 40 a pour effet de faire progresser l'extrémité 62 du manchon interne 60 en direction du joint 14 et d'amener la surface externe du manchon interne 60 en contact avec le joint 20. Comme il ressort de la figure 9, ce mouvement a pour effet de plaquer fermement le joint torique 20 contre le fond 19a de la gorge 19.

L'extrémité 62 est chanfreinée sur l'extérieur. Elle est définie par une surface tronconique 66 convergente vers l'avant de l'élément femelle A et dont le demi-angle au sommet α a une valeur comprise entre 10° et 40°. De façon préférentielle, la valeur de l'angle α est de l'ordre de 25°. Cette géométrie de l'extrémité 62 lui permet d'interagir avec le joint 20 sans « marquer » ou user ce joint de façon excessive lors des manoeuvres successives du raccord R.

Par ailleurs, l'extrémité avant du manchon externe 78 est chanfreinée sur l'extérieur et délimitée par une surface 782 qui est tronconique convergente vers l'avant et dont le demi-angle au sommet β est compris entre 60 et 80°, de préférence de l'ordre de 72°. Ce chanfrein crée un effet coin qui retient le joint 20 dans la gorge 19 malgré le frottement exercé par la surface externe du manchon interne 60 en mouvement relatif par rapport au manchon externe 78 pour la purge.

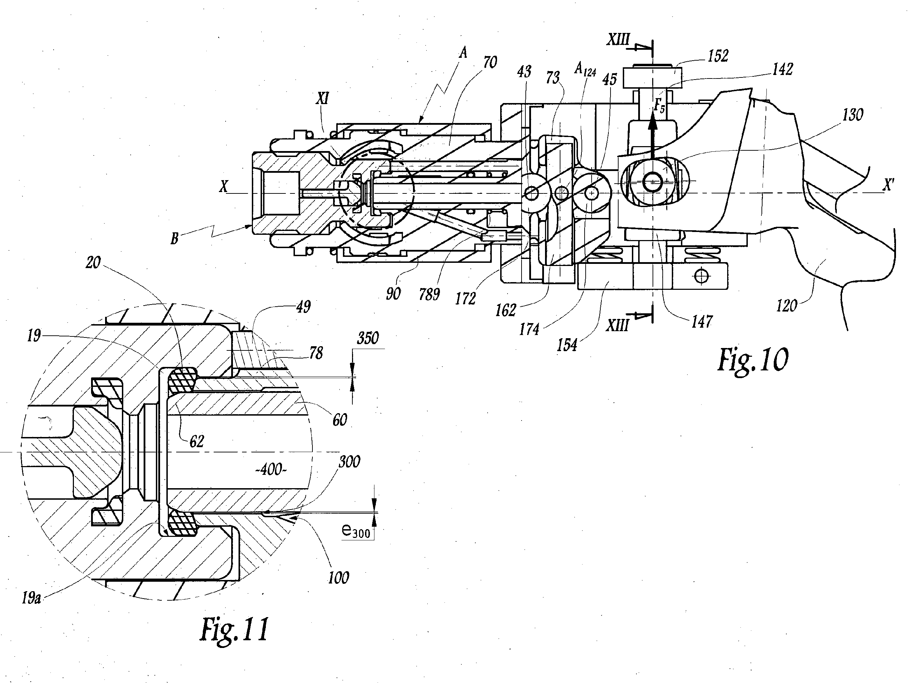

A partir de la configuration des figures 8 et 9, lorsque l'utilisateur poursuit le mouvement de pivotement du levier 120, dans le sens de la flèche F₁, ce levier pivote non plus autour des galets 130 et 134 mais autour de l'axe A₁₂₄. En effet, à ce stade, le corps 11 solidaire en translation du corps auxiliaire 70 est en butée contre le pion 49 du corps principal 40, ce qui rend impossible le mouvement de la came 162 selon la flèche F₂ car il faudrait que le galet 172 coopère avec une surface de la came 162 décalée vers l'avant selon l'axe X-X'. La cinématique décrite permet donc de conditionner l'ouverture de la vanne 200 à la présence d'un élément mâle B verrouillé dans l'élément femelle A. La came 162 a alors atteint une position de fin de course dans laquelle le pion 124 est immobilisé. Ainsi, la poursuite du déplacement du levier 120 dans le sens de la flèche F₁ a pour effet de transmettre aux galets 130 et 134 un effort représenté par les flèches F₅ aux figures 10 et 13. Cet effort déplace l'équipage constitué des pièces 50, 52, 142, 144, 152 et 154 à l'encontre de l'effort exercé par les ressorts 182 et 184 et par la pression du fluide dans l'espace annulaire 542. Cet équipage constitue la partie mobile de la vanne 200 formée dans l'élément femelle A, tandis que le corps principal 40 constitue la partie fixe de la vanne 200 et porte le siège 47.

La géométrie des lumières 126 et 128, rend ces lumières compatibles avec le pivotement du levier 120 autour de l'axe A₁₂₄, alors que l'axe A₁₃₂ garde une même position le long de l'axe X-X' au cours du déplacement de l'équipage mobile de la vanne 200.

Les pièces 142, 144, 152 et 154 constituent des moyens de liaison mécanique entre le piston amont 50 et le piston aval 52, ces moyens de liaison étant disposés à l'extérieur du conduit 400 de circulation de fluide dans l'élément femelle A. Ceci implique que ces moyens de liaison mécanique ne sont pas soumis à l'action chimique du fluide transitant à travers le raccord R et ne gênent pas la circulation du fluide.

Un joint torique 190 est monté dans le corps principal 40 au niveau du siège 47 sur lequel peut venir en appui une surface en tronçon de sphère 504 du piston 50. Le piston 50 est monobloc et il comprend une partie intermédiaire 505 qui est cylindrique à section circulaire et qui est engagée à jeu réduit dans l'alésage 54 qui est également cylindrique et à section circulaire. Un joint torique 192 est disposé dans une gorge 194 ménagée sur la surface radiale de l'alésage 54 et réalise l'étanchéité entre l'espace annulaire 542 et l'extérieur du corps 40. La section d'étanchéité entre le piston 50 et le corps principal 40 au niveau du joint 192 correspond à un disque de diamètre égal au diamètre D₅₀₅ de la partie 505.

On note par ailleurs D₅₀₄ le diamètre de la section d'étanchéité entre le piston 50 et le corps principal 40 au niveau du joint 190 en configuration fermée de la vanne. Le diamètre D₅₀₄ est supérieur au diamètre D₅₀₅, ce qui induit qu'en configuration fermée de la vanne 200, c'est-à-dire lorsque le piston 50 est en appui sur le siège 47, l'effort exercé par le fluide sur le piston 50 dans le sens de la fermeture de la vanne, proportionnel au diamètre D₅₀₄, est supérieur à l'effort du fluide sur le piston 50 dans le sens de l'ouverture, proportionnel au diamètre D₅₀₅, et la résultante des efforts de pression subis par le piston 50 tend à plaquer ce piston contre son siège.

Les ressorts 182 et 184 assurent la fermeture en cas de pression insuffisante en amont du siège 47. La différence entre les diamètres D₅₀₅ et D₅₀₄₃ de l'ordre de 10%, reste faible, ce qui induit un faible effort d'ouverture de la vanne malgré la pression élevée.

Dans l'exemple représenté sur les figures, le piston 50 est cylindrique à section circulaire. Il peut toutefois avoir une autre géométrie et l'effet de plaquage par défaut du piston 50 contre son siège 47 est obtenu pour autant que l'aire de la section transversale du piston 50, prise au niveau de son contact étanche avec l'alésage 54 perpendiculairement à l'axe Y-Y', est inférieure à l'aire de la section transversale du piston 50 au niveau de sa zone d'appui sur le siège 47 en position fermée de la vanne 200.

Le piston 50 comprend dans la direction Y-Y' une tête 506 reliée à la partie 505 par une tige 507 de diamètre réduit. Le piston 50 est monté sur la plaque 152 en insérant la tête 506 dans un logement 156 formé sur le côté de la plaque 152 opposée au corps principal 40. Un jeu radial J₁ est ménagé entre la tige 507 et le bord d'un orifice 157 que traverse cette tige, au fond du logement 156. Ce jeu radial J₁ permet un ajustement de la position du piston 50 par rapport à la plaque 152, selon une direction perpendiculaire à l'axe Y-Y'.

Par ailleurs, la tête 506 est montée dans le logement 156 avec un jeu axial J₂, parallèle à l'axe Y-Y'. Ceci permet un ajustement de la position axiale, le long de l'axe Y-Y', du piston 50 par rapport à la plaque 152, notamment lorsque le piston vient en appui contre son siège 47.

Le piston 52 est cylindrique à section circulaire et l'alésage 56 a une section circulaire correspondante. Un joint torique 196 est installé dans une gorge 198 ménagée sur la surface radiale de l'alésage 56. La section d'étanchéité entre le piston 52 et l'alésage 56 au niveau du joint 196 est réalisée sur un disque de diamètre égal au diamètre D₅₂₀ du piston 52. Le diamètre D₅₂₀ est supérieur au diamètre D₅₀₅ de sorte que, en configuration ouverte de la vanne représentée à la figure 13, l'effort exercé par le fluide sur le piston 52, notamment au niveau de sa surface 522, dirigé dans le sens de la fermeture de la vanne et proportionnel au diamètre D₅₂₀, est supérieur à l'effort du fluide sur le piston 50, notamment au niveau de sa surface 502, dirigé dans le sens de l'ouverture et proportionnel au diamètre D₅₀₅ et la résultante des efforts de pression dûs à la présence du fluide dans l'espace 542 et dans la chambre 44 et qui s'appliquent sur l'équipage mobile tend à refermer la vanne.

Ce fonctionnement peut être obtenu pour autant que l'aire de la section transversale du piston 52 au niveau de son contact étanche avec l'alésage 56 est supérieure à l'aire de la section transversale du piston 50 au niveau de son contact étanche avec l'alésage 54.

La différence entre les diamètres D₅₀₅ et D₅₂₀ est de l'ordre de 4% et n'est donc pas visible sur les dessins.

Lorsque la vanne est ouverte, les colonnes 142 et 144 sont soumises, par les efforts exercés par la pression du fluide sur les pistons 50 et 52, à des contraintes de traction non préjudiciables car les colonnes 142 et 144 sont disposées à l'extérieur du conduit 400 de circulation et donc dimensionnables sans perturber le passage du fluide.

Le piston 52 comprend une tête 526 et une tige 527 de géométries analogues à celles des éléments 506 et 507. Un logement 158 et un orifice 159 comparables au logement 156 et à l'orifice 157 sont ménagés dans la plaque 154 et permettent de recevoir respectivement la tête 526 et la tige 527 avec un jeu radial J₃, ce qui permet un ajustement de la position du piston 52 par rapport à la plaque 154 perpendiculairement à l'axe Y-Y'. Les logements 156 et 158 accueillent les têtes 506 et 526 avec des jeux radiaux au moins égaux respectivement aux jeux J₁ et J₃, voire supérieurs. En variante, les jeux J₁ et J₃ à prendre en considération sont définis au niveau des têtes 506 et 526, les orifices 157 et 159 accueillant les tiges 507 et 527 avec un jeu radial au moins égal, voire supérieur.

Du fait de l'ouverture de la vanne 200, le fluide sous pression provenant du tuyau 46 s'écoule dans le canal 42, après avoir traversé les parties 48, 542 et 44 du conduit de circulation 400, avec une pression suffisante pour repousser le clapet anti-retour 13 dans le corps 11 de l'élément mâle, de sorte que celui-ci s'écarte du joint 14 et laisse passer le fluide dans le canal 12. Dans la configuration verrouillée des éléments mâle et femelle, avec la vanne 200 ouverte autorisant la circulation du fluide, cette pression s'exerce également sur le joint 20 qui est ainsi plaqué à la fois contre le fond 19a de la gorge 19, contre la surface externe du manchon 60 et contre l'extrémité avant du manchon externe 78. Dans cette position représentée à la figure 11, le joint 20 empêche le passage du fluide à la fois dans la zone d'interface entre le corps 11 et le manchon externe 78, c'est-à-dire l'espace annulaire 350 défini entre le corps 11 de l'élément mâle B et une partie du corps auxiliaire 70 de l'élément femelle A, ainsi que dans la zone d'interface entre les manchons interne 60 et externe 78, c'est-à-dire l'espace annulaire 300. Ce faisant, le joint 20 empêche l'écoulement de fluide sous pression à la fois vers l'extérieur des corps 11 et 70 et vers le conduit d'échappement 100. Cette fonction de double étanchéité du joint 20 permet une simplification de la construction et un gain économique.

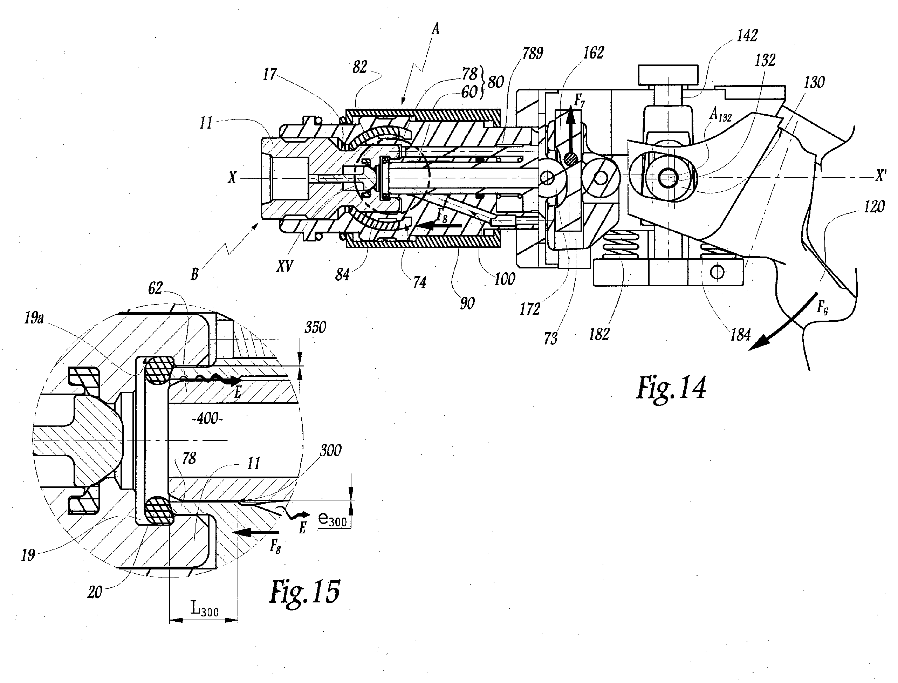

Lorsqu'il convient de refermer la vanne avant de désaccoupler les éléments mâle et femelle B et A, l'opérateur fait pivoter le levier 120 dans le sens de la flèche F₆ à la figure 14, c'est-à-dire dans un sens inverse de celui de la flèche F₁, ce qui a pour effet, par un mouvement inverse de celui explicité ci-dessus au sujet du levier 120, de ramener le piston 50 en appui contre son siège 47. La vanne est donc fermée, interrompant la circulation du fluide. Le clapet 13 n'étant plus repoussé dans le canal 12 par la pression du fluide circulant dans l'élément mâle B est ramené contre son siège par un ressort non représenté. La poursuite du mouvement selon la flèche F₆ du levier 120 a pour effet de déplacer les cames 162 et 122 dans le sens de la flèche F₇ à la figure 14. Ce déplacement des cames 162 qui sont toujours engagées entre les galets 172 et 174 autorise le déplacement du corps auxiliaire 70 par rapport au corps principal 40 vers l'avant de l'élément femelle A, c'est-à-dire vers la gauche de la figure 14, comme représenté par la flèche F₈ sur cette figure. Le mouvement vers l'avant du corps auxiliaire 70 a lieu grâce à l'action du ressort 789 s'exerçant sur le manchon externe 78 et grâce à la pression du fluide emprisonné qui s'exerce sur le corps 11 de l'élément mâle B, tendant à le faire reculer hors de l'élément femelle A et maintenant les organes de verrouillage 82 et 84 dans la gorge 17.

Comme il ressort de la figure 15, ce mouvement a pour effet de ramener le manchon externe 78 dans une configuration où son bord avant est sensiblement aligné, selon une direction perpendiculaire à l'axe X-X', avec le bord avant de l'extrémité 62. Dans cette configuration où le fluide sous pression emprisonné entre le piston 50 et le clapet 13 doit être purgé, le joint torique 20 est plaqué contre le fond 19a de la gorge 19 et contre l'extrémité avant du manchon 78 mais n'est plus en contact avec le manchon 60. La forme du manchon externe 78, notamment la valeur de l'angle β, est choisie pour ne pas marquer le joint 20 dans cette position.

L'espace annulaire 300 débouche directement dans la gorge 19 qui communique avec un volume formé par le raccordement du conduit de circulation de fluide 400 et du canal de circulation 12 en amont du clapet 13. L'espace 300 débouche dans la gorge 19 de manière axiale et au niveau des bords avant du manchon interne 60 et/ou du manchon externe 78.

Dans cette configuration où l'élément mâle B est verrouillé dans l'élément femelle A, la vanne 200 fermée et l'élément femelle purgé, le joint torique 20 empêche le passage du fluide dans la zone d'interface entre le manchon externe 78 et le corps 11 de l'élément mâle B, c'est-à-dire l'espace annulaire 350, de sorte que les éléments mâle B et femelle A restent en contact étanche et que du fluide ne s'échappe pas vers l'extérieur de l'ensemble formé des corps 11 et 70. En revanche, le joint torique 20 n'empêche plus le passage du fluide dans la zone d'interface 300 entre les manchons 60 et 78, de sorte que du fluide sous pression peut s'écouler dans l'espace annulaire 300 jusque dans le conduit d'échappement 100, comme représenté par les flèches d'écoulement E à la figure 15.

Ainsi, le fluide sous pression résiduel se trouvant emprisonné en aval du siège 47 dans la chambre 44 et dans le canal 42 après fermeture de la vanne 200 et du clapet 13 peut être évacué à travers le conduit d'échappement 100. Lorsque la valeur de la pression en aval du siège 47 devient inférieure à une certaine valeur, déterminée pour la sécurité de l'utilisateur, le ressort 92 parvient à repousser la bague de commande 90, les organes de verrouillage 82 et 84 se dégagent de la gorge 17 et l'élément mâle B peut être dégagé de l'élément femelle A.

Grâce au positionnement des manchons 60 et 78 et du joint torique 20, une fonction automatique du contrôle de l'écoulement du fluide sous pression vers le conduit d'échappement 100 est obtenue, laquelle ne requiert pas de manoeuvre particulière de la part d'un utilisateur puisqu'elle résulte, de façon automatique, des mouvements des parties constitutives du raccord lors des étapes successives d'accouplement, d'ouverture de la vanne 200, de fermeture de la vanne 200 et de désaccouplement.

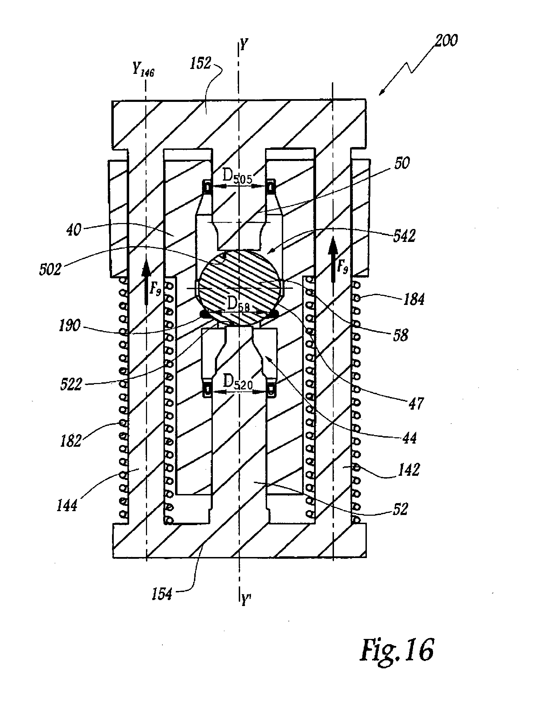

Dans le deuxième mode de réalisation de l'invention représenté à la figure 16, les éléments analogues à ceux du premier mode de réalisation portent les mêmes références. La vanne 200 de ce mode de réalisation comprend un premier piston 50 et un deuxième piston 52 entre lesquels est disposée selon la direction Y-Y' une bille 58 apte à venir en appui contre un siège 47 formé par le corps principal 40 de l'élément femelle du raccord et qui est équipé d'un joint torique 190. Les pistons 50 et 52 coopèrent avec la bille 58 au niveau de leurs surfaces d'extrémité respectives 502 et 522. Ces contacts peuvent être simultanés ou non simultanés. Un espace annulaire 542 est défini autour du piston 50 et de la bille 58, en amont du joint 47, alors qu'une chambre d'écoulement 44 est définie en aval de ce siège. La chambre 44 est une partie d'un conduit 400 d'écoulement de fluide sous pression dans le corps principal 40 de l'élément femelle de raccord A. En configuration fermée de la vanne, le piston 50 vient indirectement en appui contre le siège 47 par l'intermédiaire de la bille 58 que le piston 50 pousse contre ce siège, au moyen de sa surface d'extrémité 502.

Pour l'ouverture de la vanne, le piston 52 pousse, par sa surface d'extrémité 522, la bille 58 de façon à la décoller du siège 47.

Selon un aspect optionnel de l'invention qui n'est pas représenté, un dispositif élastique peut être intercalé entre la surface 502 du piston 50 et la bille 58 pour maintenir un contact entre le piston 50 et la bille 58, malgré le jeu axial entre le piston 50 et la plaque 152. Comme dans le premier mode de réalisation, les pistons 50 et 52 sont reliés par des moyens de liaison mécanique constitués par deux colonnes 142 et 144 et deux plaques 152 et 154 qui sont disposées à l'extérieur du conduit d'écoulement du fluide sous pression 400.

En configuration fermée représentée à la figure 18, la bille 58 repose sur le siège 47. Le fluide présent dans l'espace annulaire 542 ne sollicite le piston 50 et la bille 58 qu'en compression.

Deux ressorts 182 et 184 exercent sur l'équipage formé des pièces 50, 52, 142, 144, 152 et 154 un effort qui tend à refermer par défaut la vanne.

Lorsqu'il convient d'ouvrir cette vanne 200, on agit sur les colonnes 142 et 144 pour exercer sur celles-ci un effort F₉ parallèle à l'axe Y-Y' de déplacement des pistons, dans un sens d'éloignement du piston 50 par rapport au siège 47. Cet effort peut être exercé par des galets tels que les galets 130 et 134 mentionnés pour le premier mode de réalisation ou par tout autre moyen adapté et non représenté.

Dans ce mode de réalisation également, les sections d'étanchéité peuvent être légèrement différentes, comme mentionné pour le premier mode de réalisation, pour sécuriser la fermeture et faciliter l'ouverture. Le diamètre D₅₈ au niveau du contact de la bille 58 avec le siège 47 qui correspond à la section d'étanchéité entre la bille 58 et le siège 47 au niveau du joint 190 est légèrement supérieur au diamètre D₅₀₅ pour limiter l'effort d'ouverture exercé par le piston 52 sur la bille 58.

Les caractéristiques techniques des modes de réalisation décrits ci-dessus peuvent être combinées entre elles dans le cadre de la présente invention.

## Revendications

1. Raccord rapide (R) destiné à la jonction amovible de canalisations (C₁, C₂) de fluide sous pression, ce raccord comprenant deux éléments respectivement mâle (B) et femelle (A), aptes à s'emmancher l'un dans l'autre, selon un axe longitudinal (X-X') de l'élément femelle (A), lequel est équipé :
- d'au moins un organe de verrouillage (82, 84) d'un embout d'élément mâle (B) en configuration emmanchée,
- d'un conduit de circulation de fluide (400),
- d'une vanne (200) de contrôle de l'écoulement du fluide dans le conduit de circulation (400), cette vanne comprenant un élément (50) mobile par rapport à un siège (47),
- d'un circuit d'échappement (100) du fluide contenu dans une portion de volume interne (44, 42) formant le conduit de circulation (400) en aval du siège (47) de la vanne (200), dans le sens d'écoulement du fluide sous pression.
- d'un embout creux (80) délimitant en partie le conduit de circulation (400) et apte à venir en appui contre un joint (20) porté par l'élément mâle (B) emmanché dans l'élément femelle (A), ce joint étant reçu dans une gorge périphérique (19) de l'élément mâle
**caractérisé en ce que**
- l'embout creux (80) est constitué d'un manchon interne (60) et d'un manchon externe (78) coaxiaux et mobiles axialement (F₄, F₈) l'un par rapport à l'autre ;
- le manchon interne (60) et le manchon externe (78) sont chacun aptes à venir en appui contre le joint (20) porté par l'élément mâle (B) ; et
- un espace (300) défini entre les deux manchons est relié fluidiquement au circuit d'échappement (100).

2. Raccord rapide selon la revendication 1, **caractérisé en ce que** l'espace (300) défini entre les deux manchons débouche axialement et sur l'avant de l'un ou des manchons (60, 78) dans un volume (19) circulaire autour de l'axe longitudinal (X-X'), ce volume étant en communication fluidique avec la portion de volume interne (44, 42).

3. Raccord rapide selon l'une des revendications précédentes, **caractérisé en ce que** :
- le manchon interne (60) est solidaire d'un corps principal (40) qui définit le siège (47) de la vanne (200),
- le manchon externe (78) est solidaire d'un corps auxiliaire (70) mobile axialement par rapport au corps principal (40).

4. Raccord rapide selon la revendication 3, **caractérisé en ce qu'**il comporte des moyens (124, 162, 172, 43) de transmission, entre un levier de commande (120) mobile par rapport au corps principal (40) et le corps auxiliaire (70), d'un mouvement de déplacement relatif du corps auxiliaire (70) et du corps principal (40), le levier étant apte à commander le passage de la vanne (200) d'une configuration ouverte à une configuration fermée.

5. Raccord rapide selon l'une des revendications précédentes, **caractérisé en ce qu'**une butée (172), solidaire d'un premier manchon (60) parmi les manchons interne (60) et externe (78) coopère avec une première came (162) étagée selon l'axe longitudinal de l'élément femelle (X-X'), solidaire selon l'axe longitudinal de l'élément femelle (X-X') du deuxième manchon (78) parmi les manchons interne (60) et externe (78), montée avec possibilité de coulissement perpendiculairement à l'axe longitudinal de l'élément femelle (X-X') dans le deuxième manchon (78), cette première came (162) étant manoeuvrable par un levier (120) articulé sur l'élément femelle (A).

6. Raccord rapide selon la revendication 5, **caractérisé en ce que** la première came (162) est solidaire d'une deuxième came (122) en appui contre un galet (94) solidaire d'une bague de commande (90) d'un organe de verrouillage (82, 84) mobile dans un logement (72, 74) ménagé dans un corps (70) de l'élément femelle (A), entre une première position, où l'organe de verrouillage est dégagé par rapport à une gorge périphérique (17) d'un embout d'élément mâle (B) emmanché dans l'élément femelle (A), et une deuxième position où l'organe de verrouillage fait saillie hors du logement dans une configuration où il peut être engagé dans la gorge d'un embout d'élément mâle (B) emmanché dans l'élément femelle (A), et **en ce que** la deuxième came (122) est apte à être déplacée par le levier dans un sens où elle repousse le galet (94) dans une direction telle que la bague de commande (90) entraîne l'organe de verrouillage de sa première position vers sa deuxième position.

7. Raccord rapide selon l'une des revendications précédentes, **caractérisé en ce que** l'extrémité (62) du manchon interne (60) est chanfreinée sur l'extérieur et présente une surface tronconique (66) d'extrémité, et **en ce que** la valeur du demi-angle au sommet (α) de la surface tronconique (66) est comprise entre 10° et 40°, de préférence de l'ordre de 25°.

8. Raccord rapide selon l'une des revendications précédentes, **caractérisé en ce que** l'extrémité du manchon externe (78) est chanfreinée sur l'extérieur et présente une surface tronconique (782) d'extrémité, et **en ce que** la valeur du demi-angle au sommet (β) de la surface tronconique est comprise entre 60 et 80° de préférence de l'ordre de 72°.

9. Raccord rapide selon l'une des revendications précédentes, **caractérisé en ce que**, en configuration verrouillée des éléments mâle (B) et femelle (A) emmanchés l'un dans l'autre avec la vanne (200) en position ouverte, le manchon interne (60) est en appui contre le joint (20), alors que ce même joint (20) empêche le passage du fluide depuis le conduit de circulation du fluide (400) vers le circuit d'échappement (100).

10. Raccord rapide selon l'une des revendications précédentes, **caractérisé en ce qu'**en configuration verrouillée des éléments mâle (B) et femelle (A) emmanchés l'un dans l'autre avec la vanne (200) en position ouverte, le même joint (20) empêche le passage du fluide depuis le conduit de circulation (400) vers le circuit d'échappement (100) et empêche le passage du fluide vers l'extérieur des éléments mâle (B) et femelle (A) par une zone d'interface (350) définie entre le manchon externe (78) et un corps (11) de l'élément mâle (B).

11. Raccord rapide selon l'une des revendications précédentes, **caractérisé en ce qu'**en configuration verrouillée des éléments mâle (B) et femelle (A) emmanchés l'un dans l'autre avec la vanne (200) en position ouverte, le joint (20) est au contact de la surface externe du manchon interne (60), de l'extrémité avant du manchon externe (78), et du fond (19a) de la gorge (19).

12. Raccord rapide selon l'une quelconque des revendications précédentes, **caractérisé en ce qu'**en configuration verrouillée des éléments mâle (B) et femelle (A) emmanchés l'un dans l'autre et purge après la fermeture de la vanne (200), le joint (20) empêche le passage du fluide vers l'extérieur des éléments mâle (B) et femelle (A) par une zone d'interface (350) définie entre le manchon externe (78) et un corps (11) de l'élément mâle (B) mais n'empêche pas le passage du fluide depuis le conduit de circulation (400) vers le circuit d'échappement (100).

13. Raccord rapide selon l'une des revendications précédentes, **caractérisé en ce que**, entre une configuration verrouillée des éléments mâle (B) et femelle (A) emmanchés l'un dans l'autre avec la vanne (200) en position ouverte et une configuration verrouillée des éléments mâle (B) et femelle (A) emmanchés l'un dans l'autre et purge après la fermeture de la vanne (200), le manchon externe (78) effectue par rapport au manchon interne (60) un mouvement axial vers l'avant de l'élément femelle (A).

14. Raccord rapide selon l'une des revendications précédentes, **caractérisé en ce que**, entre une configuration non verrouillée des éléments mâle (B) et femelle (A) emmanchés l'un dans l'autre avec la vanne (200) en position fermée et une configuration verrouillée des éléments mâle (B) et femelle (A) emmanchés l'un dans l'autre avec la vanne (200) en position ouverte, le manchon externe (78) effectue par rapport au manchon interne (60) un mouvement axial vers l'arrière de l'élément femelle (A).

## Patentansprüche

1. Schnellkupplung (R), vorgesehen für die lösbare Verbindung von unter Druck stehenden Fluidleitungen (C₁, C₂), wobei diese Kupplung zwei Elemente, ein Einsteckelement (B) und ein Aufnahmeelement (A), umfasst, die geeignet sind, gemäß einer Längsachse (X-X') des Aufnahmeelements (A) ineinandergesteckt zu werden, wobei das Aufnahmeelement ausgerüstet ist mit:
- mindestens einem Element (82, 84) zur Verriegelung eines Ansatzes des Einsteckelements (B) in der ineinandergesteckten Stellung,
- einem Kanal (400) für die Zirkulation eines Fluids,
- einem Ventil (200) zur Steuerung der Strömung des Fluids in dem Zirkulationskanal (400), wobei dieses Ventil ein in Bezug auf einen Sitz (47) bewegliches Element (50) umfasst,
- einem Auslasskreis (100) für das Fluid, der in einem Bereich des Innenvolumens (44, 42), das den Zirkulationskanal (400) bildet, in Richtung der Strömung des unter Druck stehenden Fluids stromaufwärts zum Sitz (47) des Ventils (200) enthalten ist,
- einem Hohlansatz (80), der einen Teil des Zirkulationskanals (400) begrenzt und geeignet ist, in Anlage gegen eine Dichtung (20) zu kommen, die von dem in das Aufnahmeelement (A) eingesteckten Einsteckelement (B) gelagert wird, wobei diese Dichtung in einer Umfangsnut (19) des Einsteckelements aufgenommen ist,
**dadurch gekennzeichnet, dass**
- der Hohlansatz (80) aus einer Innenhülse (60) und einer Außenhülse (78) besteht, die koaxial und axial (F₄, F₈) zueinander beweglich sind;
- die Innenhülse (60) und die Außenhülse (78) jeweils geeignet sind, in Anlage gegen die von dem Einsteckelement (B) gelargerten Dichtung (20) zu kommen; und
- ein zwischen den zwei Hülsen begrenzter Raum (300) fluidisch mit dem Auslasskreis (100) verbunden ist.

2. Schnellkupplung nach Anspruch 1, **dadurch gekennzeichnet, dass** der zwischen den zwei Hülsen definierte Raum (300) axial und an der Vorderseite von einer oder der Hülsen (60, 78) in einem Kreisvolumen (19) um die Längsachse (X-X') mündet, wobei dieses Volumen in fluidischer Verbindung mit dem Bereich des Innenvolumens (44, 42) ist.

3. Schnellkupplung nach einem der vorhergehenden Ansprüche, **dadurch gekennzeichnet, dass**:
- die Innenhülse (60) mit einem Hauptkörper (40) verbunden ist, der den Sitz (47) des Ventils (200) begrenzt,
- die Außenhülse (78) mit einem Hilfskörper (70) verbunden ist, der axial in Bezug auf den Hauptkörper (40) beweglich ist.

4. Schnellkupplung nach Anspruch 3, **dadurch gekennzeichnet, dass** sie zwischen einem zu dem Hauptkörper (40) beweglichen Steuerhebel (120) und dem Hilfskörper (70) Mittel (124, 162, 172, 43) zur Übertragung einer Bewegung der Verschiebung relativ zum Hilfskörper (70) und zum Hauptkörper (40) aufweist, wobei der Hebel geeignet ist, den Übergang des Ventils (200) von einer Offenstellung in eine geschlossene Stellung zu steuern.

5. Schnellkupplung nach einem der vorhergehenden Ansprüche, **dadurch gekennzeichnet, dass** ein Anschlag (172), der mit einer ersten Hülse (60) aus Innenhülse (60) und Außenhülse (78) verbunden ist, mit einem ersten Nocken (162) zusammenarbeitet, der gemäß der Längsachse (X-X') des Aufnahmeelement gestuft angeordnet ist und gemäß der Längsachse (X-X') des Aufnahmeelements mit der zweiten Hülse (78) aus Innenhülse (60) und Außenhülse (78) verbunden ist und mit der Möglichkeit des Gleitens senkrecht zur Längsachse (X-X') des Aufnahmeelements in der zweiten Hülse (78) montiert ist, wobei dieser erste Nocken (162) durch einen Hebel (120) betätigbar ist, der an dem Aufnahmeelement (A) angelenkt ist.

6. Schnellkupplung nach Anspruch 5, **dadurch gekennzeichnet, dass** der erste Nocken (162) mit einem zweiten Nocken (122) in Anlage gegen eine Rolle (94)verbunden ist, die mit einem Steuerring (90) eines Verriegelungselements (82, 84) verbunden ist, das in einem in dem Körper (70) des Aufnahmeelements (A) eingearbeiteten Aufnahmeraum (72, 74) zwischen einer ersten Position, in der das Verriegelungselement in Bezug auf eine Umfangsnut (17) eines Ansatzes des Einsteckelements (B), der in das Aufnahmeelement (A) eingesteckt ist, frei ist, und einer zweiten Position, in der das Verriegelungselement aus dem Aufnahmeraum in einer Konfiguration, in der es in die Nut eines in das Aufnahmeelement (A) eingesteckten Ansatzes des Einsteckelements (B) in Eingriff sein kann, herausragt, und dass der zweite Nocken (122) geeignet ist, durch den Hebel in eine Richtung bewegt zu werden, in der er die Rolle (94) in eine Richtung zurückschiebt, derart, dass der Steuerring (90) das Verriegelungselement aus seiner ersten Position in seine zweite Position mitnimmt.

7. Schnellkupplung nach einem der vorhergehenden Ansprüche, **dadurch gekennzeichnet, dass** das Ende (62) der Innenhülse (60) außen abgeschrägt ist und eine kegelstumpfförmige Endfläche aufweist und dass der Wert des Öffnungswinkels (α) der kegelstumpfförmigen Fläche (66) zwischen 10°und 40° liegt, vorzugsweise in der Größenordnung von 25° ist.

8. Schnellkupplung nach einem der vorhergehenden Ansprüche, **dadurch gekennzeichnet, dass** das Ende der Außenhülse (78) außen abgeschrägt ist und eine kegelstumpfförmige Endfläche (782) aufweist und dass der Wert des Öffnungswinkels (β) der kegelstumpfförmigen Fläche zwischen 60 und 80° liegt, vorzugsweise in der Größenordnung von 72° ist.

9. Schnellkupplung nach einem der vorhergehenden Ansprüche, **dadurch gekennzeichnet, dass** in der verriegelten Stellung des Einsteckelements (B) und des Aufnahmeelements (A), die ineinander gesteckt sind, bei Offenstellung des Ventils (200) die Innenhülse (60) in Anlage gegen die Dichtung (20) ist, wobei diese selbe Dichtung (20) den Durchgang des Fluids von dem Zirkulationskanal (400) des Fluids zum Auslasskreis (100) verhindert.

10. Schnellkupplung nach einem der vorhergehenden Ansprüche, **dadurch gekennzeichnet, dass** in der verriegelten Stellung des Einsteckelements (B) und des Aufnahmeelements (A), die ineinandergesteckt sind, bei Offenstellung des Ventils (200) dieselbe Dichtung (20) den Durchgang des Fluids von dem Zirkulationskanal (400) zu dem Auslasskreis (100) verhindert und den Durchgang des Fluids nach außen in Bezug auf das Einsteckelement (B) und das Aufnahmeelement (A) über eine Grenzzone (350) verhindert, die zwischen der Außenhülse (78) und einem Körper (11) des Einsteckelements (B) definiert ist.

11. Schnellkupplung nach einem der vorhergehenden Ansprüche, **dadurch gekennzeichnet, dass** in der verriegelten Stellung des Einsteckelements (B) und des Aufnahmeelements (A), die ineinandergesteckt sind, bei Offenstellung des Ventils (200) die Dichtung (20) in Kontakt mit der Außenfläche der Innenhülse (60), dem vorderen Ende der Außenhülse (78) und dem Grund (19a) der Nut (19) ist.

12. Schnellkupplung nach einem beliebigen der vorhergehenden Ansprüche, **dadurch gekennzeichnet, dass** in der verriegelten Stellung des Einsteckelements (B) und des Aufnahmeelements (A), die ineinandergesteckt sind, und Ablassen nach dem Schließen des Ventils (200) die Dichtung (20) den Durchgang des Fluids nach außen in Bezug auf das Aufnahmeelement (A) und das Einsteckelement (B) über eine Grenzzone (350) verhindert, die zwischen der Außenhülse (78) und einem Körper (11) des Einsteckelements (B) definiert ist, aber nicht den Durchgang des Fluids von dem Zirkulationskanal (400) zu dem Auslasskreis (100) verhindert.

13. Schnellkupplung nach einem der vorhergehenden Ansprüche, **dadurch gekennzeichnet, dass** in einer verriegelten Stellung des Einsteckelements (B) und des Aufnahmeelements (A), die ineinandergesteckt sind, bei Offenstellung des Ventils (200) und einer verriegelten Stellung des Einsteckelements (B) und des Aufnahmeelements (A), die ineinandergesteckt sind, und Ablassen nach dem Schließen des Ventils (200) die Außenhülse (78) in Bezug auf die Innenhülse (60) eine axiale Bewegung zur Vorderseite des Aufnahmeelements (A) durchführt.

14. Schnellkupplung nach einem der vorhergehenden Ansprüche, **dadurch gekennzeichnet, dass** zwischen einer nichtverriegelten Stellung des Aufnahmeelements (A) und des Einsteckelements (B), die ineinandergesteckt sind, bei Schließstellung des Ventils (200) und einer verriegelten Stellung des Einsteckelements (B) und des Aufnahmeelements (A), die ineinandergesteckt sind, bei Offenstellung des Ventils (200) die Außenhülse (78) in Bezug auf die Innenhülse (60) eine axiale Bewegung zur Rückseite des Aufnahmeelements (A) durchführt.

## Claims

1. A quick-connect (R) coupling for releasably joining together pipes (C₁, C₂) for pressurized fluid, said coupling including two elements, respectively male (B) and female (A), capable of fitting one the into other, along a longitudinal axis (X-X') of the female element (A), which is equipped with:
at least one locking member (82, 84) for locking an end-piece of a male element (B) in the interfitted configuration;
· a fluid flow duct (400);
· a valve (200) for controlling the flow of fluid through the flow duct (400), which valve includes an element (50) mounted to move relative to a seat (47);
. a discharge circuit (100) for discharging the fluid contained in an internal volume portion (44, 42) forming the flow duct (400) downstream from the seat (47) of the valve (200) in the flow direction of the pressurized fluid; and
· a hollow end-piece (80) defining the flow duct (400) in part and suitable for coming to bear against a seal (20) carried by a male element (B) fitted into the female element (A), this seal being received in a peripheral groove (19) of the male element;
said female quick-connect coupling element being **characterized in that**:
- the hollow end-piece (80) is constituted by an inner sleeve (60) and by an outer sleeve (78) that are coaxial and mounted to move axially (F₄, F₈) relative to each other;
- the inner sleeve (60) and the outer sleeve (78) are each adapted to come into abutment against the seal (20) carried by the male element (B); and
- a space (300) defined between the two sleeves is in fluid connection with the discharge circuit (100).

2. A quick-connect coupling according to claim 1, **characterized in that** the space (300) defined between the two sleeves opens out axially and onto the front of one of the sleeves (60, 78) or onto the fronts of both the sleeves (60, 78) into a circular volume (19) about the longitudinal axis (X-X'), which volume is in fluid communication with the internal volume portion (44, 42).

3. A quick-connect coupling according to either of the preceding claims, **characterized in that**:
· the inner sleeve (60) is secured to or integral with a main body (40) that defines the seat (47) of the valve (200);
· the outer sleeve (78) is secured to or integral with an auxiliary body (70) that is mounted to move axially relative to the main body (40).

4. A quick-connect coupling according to claim 3, **characterized in that** it is provided with transmission means (124, 162, 172, 43) for transmitting movement between a control lever (120) mounted to move relative to the main body (40) and the auxiliary body (70), to cause the auxiliary body (70) to move relative to the main body (40), the lever being suitable for causing the valve (200) to go from an open configuration to a closed configuration.

5. A quick-connect coupling according to any preceding claim, **characterized in that** an abutment (172), constrained to move with a first sleeve (60) chosen from among the inner sleeve (60) and the outer sleeve (78) cooperates with a first cam (162) that is stepped along the longitudinal axis (X-X') of the female element, that is constrained to move along the longitudinal axis (X-X') of the female element with the second sleeve (78) chosen from among the inner sleeve (60) and the outer sleeve (78), and that is mounted to be slidable perpendicularly to the longitudinal axis (X-X') of the female element in the second sleeve (78), said first cam (162) being drivable by a lever (120) hinged to the female element (A).

6. A quick-connect coupling according to claim 5, **characterized in that** the first cam (162) is secured to a second cam (122) in abutment against a roller (94) secured to a control ring (90) for controlling a locking member (82, 84) that is mounted to move in a recess (72, 74) provided in a body (70) of the female element (A), between a first position, in which the locking member is disengaged from a peripheral groove (17) in an end-piece of a male element (B) fitted into the female element (A), and a second position in which the locking member projects from the recess in a configuration in which it can be engaged in the groove of an end-piece of a male element (B) fitted into the female element (A), and **in that** the second cam (122) is suitable for being moved by the lever in a direction in which it pushes the roller (94) back in a direction such that the control ring (90) drives the locking member from its first position to its second position.

7. A quick-connect coupling according to any preceding claim, **characterized in that** the end (62) of the inner sleeve (60) is beveled on the outside and has a frustoconical end surface (66), and **in that** the value of the half-angle at the vertex (α) of the frustoconical surface (66) lies in the range 10° to 40°, and is preferably about 25°.

8. A quick-connect coupling according to any preceding claim, **characterized in that** the end of the outer sleeve (78) is beveled on the outside and has a frustoconical end surface (782), and **in that** the value of the half-angle at the vertex (β) of the frustoconical surface lies in the range 60° to 80°, and is preferably about 72°.

9. A quick-connect coupling according to any preceding claim, **characterized in that**, when the male element (B) and the female element (A) are in the locked configuration, as fitted one into the other, and with the valve (200) in the open position, the inner sleeve (60) is bearing against the seal (20), while the same seal (20) prevents the fluid from flowing from the fluid flow duct (400) towards the discharge duct (100).

10. A quick-connect coupling according to any preceding claim, **characterized in that**, when the male element (B) and the female element (A) are in the locked configuration, as fitted one into the other, and with the valve (200) in the open position, the same seal (20) prevents the fluid from flowing from the flow duct (400) towards the discharge circuit (100), and prevents the fluid from flowing towards the outside of the male element (B) and of the female element (A) via an interface zone (350) defined between the outer sleeve (78) and a body (11) of the male element (B).

11. A quick-connect coupling according to any preceding claim, **characterized in that**, when the male element (B) and the female element (A) are in the locked configuration, as fitted one into the other, and with the valve (200) in the open position, the seal (20) is in contact with the outside surface of the inner sleeve (60), with the front end of the outer sleeve (78) and with the bottom (19a) of the groove (19).

12. A quick-connect coupling according to any preceding claims 9 to 12, **characterized in that** when the male element (B) and the female element (A) are in the locked configuration, as fitted one into the other, and upon purge, after the valve (200) has been closed, the seal (20) prevents the fluid from flowing towards the outside of the male element (B) and of the female element (A) via an interface zone (350) defined between the outer sleeve (78) and a body (11) of the male element (B), but does not prevent the fluid from flowing from the flow duct (400) towards the discharge circuit (100).

13. A quick-connect coupling according to any preceding claim, **characterized in that**, between a locked configuration in which the male element (B) and the female element (A) are locked, as fitted one into the other, and with the valve (200) in the open position, and a locked configuration in which the male element (B) and the female element (A) are locked, as fitted one into the other, upon purge after the valve (200) has been closed, the outer sleeve (78) moves relative to the inner sleeve (60) in an axial movement towards the front of the female element (A).

14. A quick-connect coupling according to any preceding claim, **characterized in that**, between an unlocked configuration in which the male element (B) and the female element (A) are not locked, as fitted one into the other and with the valve (200) in the closed position, and a locked configuration in which the male element (B) and the female element (A) are locked, as fitted one into the other and with the valve (200) in the open position, the outer sleeve (78) moves relative to the inner sleeve (60) in an axial movement towards the rear of the female element (A).
